# EUROPEAN PATENT SPECIFICATION

(11) **EP 0 964 950 B1**
(45) Date of publication and mention of the grant of the patent: **25.09.2002**
(21) Application number: 98906501.6
(22) Date of filing: 18.02.1998
(51) Int. Cl.: D04H 13/00

(54) **TEAR RESISTANT POROUS EXTENSIBLE WEB**
REISSFESTE PORÖSE DEHNBARE BAHN
VOILE EXTENSIBLE, POREUX, RESISTANT AU DECHIREMENT

(30) Priority: 21.02.1997 US 803905; 14.03.1997 US 816106
(43) Date of publication of application: 22.12.1999
(73) Proprietor: THE PROCTER & GAMBLE COMPANY, Cincinnati, Ohio 45202 (US)
(72) Inventor: CURRO, John, Joseph, Cincinnati, OH 45213 (US); MANSFIELD, Michele, Ann, Cincinnati, OH 45220 (US); DOBRIN, George, Christopher, Mason, OH 45040 (US)
(74) Representative: Hirsch, Uwe Thomas
(86) International application number: US9803043
(87) International publication number: WO98037266

(56) References cited:
- WO-A-93/22995
- US-A- 5 368 909
- US-A- 5 376 430
- US-A- 5 514 105
- US-A- 5 733 628
- DATABASE WPI Section Ch, Week 9214 Derwent Publications Ltd., London, GB; Class A32, AN 92-110131 XP002067937 & JP 04 052 130 A (KAO CORP)

## Description

### FIELD OF THE INVENTION

The present invention relates to porous extensible polymeric webs. In particular, the present invention relates to macroscopically-expanded three-dimensional apertured polymeric webs.

### BACKGROUND OF THE INVENTION

It has long been known in the field of disposable absorbent articles that it is desirable to construct absorptive devices, such as disposable diapers, sanitary napkins, incontinent briefs, bandages, wound dressings, and the like, with elastic elements to improve the range of size, ease of motion, and sustained fit. It is also well known that it is preferable, especially in such products intended to be worn in hot and humid conditions, to provide adequate porosity to all areas of the article where undue occlusion of the skin may cause sensitized skin or heat rash. Due to the nature of many disposable absorbent articles there is a high potential for skin irritation due to trapping of moisture and other body exudates between the elasticized portion of the article and the skin of the wearer. Elasticized portions of disposable articles are particularly prone to causing skin irritations as they tend to be more conformable to the body, and therefore more likely to occlude areas of the skin, often for long periods of time. Various methods are known in the art for imparting elasticity to polymer films, and various methods are known in the art for imparting porosity to polymer films, but there remains a need for a polymeric film or web that provides for both adequate elasticity and porosity, such as may be adapted for durable, prolonged use in garments, particularly disposable garments.

Disposable diapers and other absorbent articles fitted with elasticized leg cuffs or elasticized waist bands for a more comfortable fit, as well as providing for better leakage control, are known in the art. Often, the elasticity is accomplished with a heat treatment of polymeric materials that results in a desirable shirring or gathering of a portion of the diaper. One such method of treatment is disclosed in U.S. Pat. No. 4,681,580, issued to Reising et al. on July 21, 1987.

An improved method for sequentially stretching a "zero strain" stretch laminate web to impart elasticity thereto is disclosed in U.S. Pat. No. 5,143,679 issued to Weber et al. on Sept. 1, 1992. Weber '679 teaches the use of a stretch laminate material formed of at least two plies, one of which is stretchable and elastomeric, while the second ply is elongatable, but not necessarily elastomeric. The plies are either intermittently or substantially continuously secured to one another along at least a portion of their coextensive surfaces while in a substantially untensioned ("zero-strain") condition. Weber '679 further discloses an improved method and apparatus for sequentially stretching the "zero-strain" stretch laminate portions of the web during the incremental stretching process to impart elasticity in the direction of stretching without rupturing the laminate web in the process. Further improvements are taught in U.S. Pat. Nos. 5,156,793 issued to Buell et al. on Oct. 20, 1992 and 5,167,897 issued to Weber et al. on Dec. 1, 1992.

Elasticized polymeric webs may also be produced from elastomeric materials known in the art, and may be laminates of polymeric materials such as disclosed in U.S. Pat. No. 5,501,679, issued to Krueger et al. on March 26, 1996. Laminates of this type are generally prepared by coextrusion of elastomeric materials and inelastic skin layers followed by stretching the laminate past the elastic limit of the skin layers and then allowing the laminate to recover. Elastomeric webs or films such as those described above may be used in the body hugging portions of garments, such as the waistband portions and leg-cuffs, but are generally not porous enough to prevent undesirable skin irritations when used for prolonged periods of time.

Several means of rendering elasticized planar polymer films more porous are known in the art, such as die punching, slitting, and hot-pin melt aperturing. However, when any of the above techniques is applied to thermoplastic elastomeric films, the increase in porosity is accompanied by a decrease in the degree of reliable elastic performance. For example, in the case of circular apertures in a planar film, it is well known that for an applied stress S₁, a resultant local stress, S₂, is created orthogonal to the applied stress about the apertures. This local stress, S₂, is greater than S₁, approaching a magnitude up to 3 times the applied stress. For non-round apertures the concentration of stress can be even greater. As a result, apertures become sources of tear initiation sites at their edges, because the edges of the material form the edges of the apertures in the plane of applied stress. For common thermoplastic elastic films. such apertures facilitate tear initiation which can propagate over time leading to catastrophic failure of the film. When used in elasticized portions of disposable absorbent articles, this failure results in the loss of important elastic characteristics, including loss of comfort, fit and use of the absorbent article.

Prior art web structures that do provide adequate porosity so as to be preferable for use as the wearer-contacting surface on disposable absorbent articles have been of two basic varieties, i.e., inherently fluid-pervious structures, such as fibrous nonwovens, and fluid-impervious materials such as polymeric webs which have been provided with a degree of fluid permeability via aperturing to permit fluid and moisture flow therethrough. Neither variety is characteristically elastic, and as a result both are generally used in regions of an absorbent article requiring fluid permeability but not extensibility, such as the body-contacting layer of a catamenial pad.

Commonly assigned U.S. Pat. No. 3,929,135 issued to Thompson on Dec. 30, 1975, suggests a suitable body-contacting porous polymeric web for disposable articles. Thompson teaches a macroscopically-expanded, three-dimensional topsheet comprised of liquid-impermeable polymeric material. However, the polymeric material is formed to comprise tapered capillaries, the capillaries having a base opening in the plane of the topsheet, and an apex opening in intimate contact with the absorbent pad utilized in the disposable absorbent bandage. The polymer material taught by Thompson is not generally an elastomer, however, and Thompson depends on the inelastic properties of the heat-molded single layer film to produce the desired three-dimensional structure.

Still another material which has been utilized as a body contacting surface in a disposable absorbent article context is disclosed in commonly assigned U.S. Pat. No. 4,342,314 issued to Radel et al. on Aug. 3, 1982. The Radel et al. patent discloses an improved macroscopically-expanded three-dimensional plastic web comprising a regulated continuum of capillary networks originating in and extending from one surface of the web and terminating in the form of apertures in the opposite surface thereof. In a preferred embodiment, the capillary networks are of decreasing size in the direction of liquid transport.

The macroscopically-expanded three-dimensional plastic webs of the type generally described in the aforementioned commonly assigned Thompson and Radel et al. patents have met with good success in permitting adequate liquid permeability due to the porosity provided by the apertures. However, because of material limitations such webs do not generally possess the requisite elasticity to allow the resulting web to have significant elastomeric characteristics. This shortcoming substantially limits the use of such webs in elasticized portions of an absorbent article.

Accordingly, it would be desirable to provide an apertured elastomeric web designed to dissociate the effects of an applied strain on the web from the edges of the apertures and hence retard or prevent the onset of tear initiation.

More particularly, in a particularly preferred embodiment, it would be desirable to provide a macroscopically-expanded three-dimensional apertured elastomeric web that is able to substantially recover its three-dimensional shape after being subjected to an applied strain of up to about 400% or more.

### SUMMARY OF THE INVENTION

In a preferred embodiment, the present invention pertains to a macroscopically-expanded, three-dimensional, elastomeric web suitable for use in elasticized portions of disposable absorbent articles such as bandages, diapers and pull-up diaper training pants. In a preferred embodiment the web has a continuous first surface and a discontinuous second surface remote from the first surface. An elastomeric web of the present invention preferably comprises a formed film having at least two polymeric layers, with at least one layer being an elastomer and at least one layer being a substantially less elastomeric skin layer. In a preferred embodiment the elastomeric web exhibits a multiplicity of primary apertures in the first surface of the web, the primary apertures being defined in the plane of the first surface by a continuous network of interconnecting members, each interconnecting member exhibiting an upwardly concave-shaped cross-section along its length. In a preferred embodiment each interconnecting member exhibits a generally U-shaped cross-section along a portion of its length, the cross-section comprising a base portion generally in the plane of the first surface of the web and sidewall portions joined to each edge of the base portion and interconnected with other sidewall portions. The interconnected sidewall portions extend generally in the direction of the second surface of the web, and are interconnected to one another intermediate the first and the second surfaces of the web. The interconnected sidewall portions terminate substantially concurrently with one another to form a secondary aperture in the plane of the second surface of the web.

Also disclosed is a method of producing the elastomeric web of the present invention comprising providing a multilayer elastomeric film, supporting the film on a forming structure, and applying a fluid pressure differential across the thickness of the multilayer film. The fluid pressure differential is sufficiently great to cause the multilayer film to conform to the supporting structure and rupture in at least portions of the formed film.

When used as an extensible, porous member in an absorbent article, the elastomeric layer of the present invention allows the interconnecting members to stretch in the plane of the first surface. The three-dimensional nature of the web places the secondary apertures in a plane of the second surface remote from the plane of the first surface, initially removing web stresses from the tear initiation sites at the edges of the secondary apertures. Initial web strain results in the base of the interconnecting members experiencing strain in the first surface. As the web strain increases, the sidewall portions of the interconnecting members intermediate the first and second surface experience strain as they begin to approach the plane of the first surface. Ultimately, upon adequate web strain, the plane of the second surface approaches the plane of the first surface and the edges of the secondary apertures will experience web strain as well.

Therefore, the three-dimensional nature of the web allows the strain on the interconnecting members in the plane of the first surface to be dissociated from the strain at the secondary apertures in the secondary surface, and therefore decoupled from potential strain-induced stress at tear initiation sites. This dissociation, or decoupling, of the strain-induced stress of the web from strain-induced stress at the secondary apertures significantly increases web reliability by allowing repeated and sustained web strains of up to about 400% or more without failure of the web due to tear initiation at the apertures.

### BRIEF DESCRIPTION OF THE DRAWINGS

While the specification concludes with claims particularly pointing out and distinctly claiming the subject matter of the present invention, it is believed that the present invention will be better understood from the following description taken in conjunction with the accompanying drawings in which like reference numerals identify identical elements and wherein:
FIG. 1 is an enlarged, partially segmented, perspective illustration of a prior art polymeric web of a type generally disclosed in commonly assigned U.S. Pat. No. 4,342,314;
FIG. 2 is an enlarged, partially segmented, perspective illustration of a preferred elastomeric web of the present invention having two layers of polymer film, at least one of which is elastomeric;
FIG. 3 is a further enlarged, partial view of a web of the type generally shown in FIG. 2, but illustrating in greater detail the web construction of an alternative elastomeric web of the present invention;
FIG. 4 is an enlarged cross-sectional view of a preferred multilayer film of an elastomeric web of the present invention having an elastomeric layer interposed between two skin layers;
FIG. 5 is a plan view of aperture shapes projected in the plane of the first surface of an alternative elastomeric web of the present invention;
FIG. 6 is an enlarged cross-sectional view of an interconnecting member taken along section line 6-6 of FIG. 5;
FIG. 7 is another enlarged cross-sectional view of an interconnecting member taken along section line 7-7 of FIG. 5;
FIGs. 8A-8C are schematic representations of a cross-section of an aperture of an elastomeric web of the present invention in various states of tension;
FIG. 9 is an enlarged optical photomicrograph showing the first surface of an elastomeric web of the present invention having an ordered pattern of approximately I mm square apertures;
FIG. 10 is an enlarged scanning electron microscope photomicrograph perspective illustration of the second surface of the elastomeric web shown in FIG. 9 in an unstretched state;
FIG. 11 is an enlarged scanning electron microscope photomicrograph perspective illustration of the second surface of the elastomeric web shown in FIG. 9 tensioned to approximately 100% strain;
FIG. 12 is an enlarged scanning electron microscope photomicrograph perspective illustration of an aperture of an elastomeric web of the present invention showing rugosities formed after extension and recovery;
FIG. 13 is a partially segmented perspective illustration of a disposable garment comprising the elastomeric web of the present invention;
FIG. 14 is a simplified, partially segmented illustration of a preferred embodiment of side panels for a disposable garment;
FIG. 15 is a simplified, partially exploded perspective illustration of a laminate structure generally useful for forming the web structure illustrated in FIG. 2;
FIG. 16 is a perspective view of a tubular member formed by rolling a planar laminate structure of the type generally illustrated in FIG. 15 to the desired radius of curvature and joining the free ends thereof to one another;
FIG. 17 is a simplified schematic illustration of a preferred method and apparatus for debossing and perforating an elastomeric film generally in accordance with the present invention;
FIG. 18 is an enlarged, partially segmented perspective illustration of an alternative elastomeric web of the present invention; and
FIG. 19 is an enlarged cross-sectional illustration of the web of FIG. 18 taken along section line 19-19.

### DETAILED DESCRIPTION OF THE PRESENT INVENTION

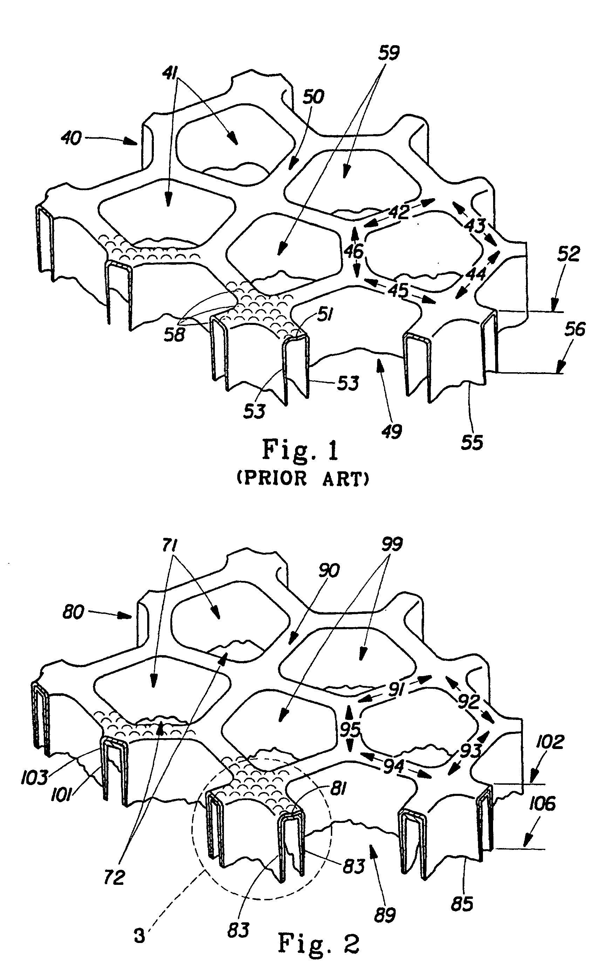

FIG. 1 is an enlarged, partially segmented, perspective illustration of a prior art macroscopically-expanded, three-dimensional, fiber-like, fluid pervious polymeric web **40** which has been found highly suitable for use as a topsheet in disposable absorbent articles, such as diapers and sanitary napkins. The prior art web is generally in accordance with the teachings of commonly assigned U.S. Pat. No. 4,342,314 issued to Radel et al. on Aug. 3, 1982. The fluid pervious web **40** exhibits a multiplicity of apertures, e.g., apertures **41,** which are formed by a multiplicity of interconnected fiber-like elements, e.g., fiber-like elements **42, 43, 44, 45,** and **46** interconnected to one another in the first surface **50** of the web. Each fiber-like element comprises a base portion, e.g., base portion **51**, located in plane **52** of the first surface **50**. Each base portion has a sidewall portion, e.g., sidewall portion **53,** attached to each edge thereof. The sidewall portions extend generally in the direction of the second surface **55** of the web. The intersecting sidewall portions of the fiber-like elements are interconnected to one another intermediate the first and second surfaces of the web, and terminate substantially concurrently with one another in the plane **56** of the second surface **55.**

In a preferred embodiment, the base portion **51** includes a microscopic pattern of surface aberrations **58** generally in accordance with the teachings of U.S. Pat. No. 4,463,045, issued to Ahr et al. on July 31, 1984. The microscopic pattern of surface aberrations **58** provides a substantially non-glossy visible surface when the web is struck by incident light rays.

In an alternative embodiment the prior web may include a multiplicity of much smaller capillary networks (not shown) in the first surface **50** of the web, as taught by U.S. Pat. No. 4,637,819 to Ouellette et al. issued Jan. 20, 1987. It is believed that the additional porosity afforded by the smaller fluid-handling capillary networks may allow the web of the present invention function more efficiently when used as an extensible, porous portion of a disposable absorbent article.

As utilized herein, the term "interconnecting members" refers to some or all of the elements of the elastomeric web, portions of which serve to define the primary apertures by a continuous network. Representative interconnecting members include, but are not limited to, the fiber-like elements of the aforementioned '314 Radel et al. patent and commonly assigned U.S. Patent No. 5,514,105 to Goodman, Jr., et al. issued on May 7, 1996. As can be appreciated from the following description and drawings, the interconnecting elements are inherently continuous, with contiguous interconnecting elements blending into one another in mutually-adjoining transition portions.

Individual interconnecting members can best be generally described, with reference to FIG. 1, as those portions of the elastomeric web disposed between any two adjacent primary apertures, originating in the first surface **50** and extending to the second surface **55**. On the first surface of the web the interconnecting members collectively form a continuous network, or pattern, the continuous network of interconnecting members defining the primary apertures, and on the second surface of the web the interconnecting sidewalls of the interconnecting members collectively form a discontinuous pattern of secondary apertures.

As utilized herein, the term "continuous", when used to describe the first surface of the elastomeric web, refers to the uninterrupted character of the first surface, generally in the plane of the first surface. Thus, any point on the first surface can be reached from any and every other point on the first surface without substantially leaving the first surface in the plane of the first surface. Likewise, as utilized herein, the term "discontinuous," when used to describe the second surface of the elastomeric web, refers to the interrupted character of the second surface, generally in the plane of the second surface. Thus, any point on the second surface cannot be reached from every other point on the second surface without substantially leaving the second surface in the plane of the second surface.

In general, as utilized herein the term "macroscopic" is used to refer to structural features or elements which are readily visible to a normal human eye when the perpendicular distance between the viewer's eye and the plane of the web is about 12 inches. Conversely, the term "microscopic" is utilized to refer to structural features or elements which are not readily visible to a normal human eye when the perpendicular distance between the viewer's eye and the plane of the web is about 12 inches.

As utilized herein, the term "macroscopically-expanded", when used to describe three-dimensional elastomeric webs, ribbons and films, refers to elastomeric webs, ribbons and films which have been caused to conform to the surface of a three-dimensional forming structure so that both surfaces thereof exhibit the three-dimensional pattern of the forming structure. Such macroscopically-expanded webs, ribbons and films are typically caused to conform to the surface of the forming structures by embossing (i.e., when the forming structure exhibits a pattern comprised primarily of male projections), by debossing (i.e., when the forming structure exhibits a pattern comprised primarily of female capillary networks), or by extrusion of a resinous melt onto the surface of a forming structure of either type.

By way of contrast, the term "planar" when utilized herein to describe plastic webs, ribbons and films, refers to the overall general condition of the web, ribbon or film when viewed by the naked eye on a macroscopic scale. For example, a non-apertured extruded film or an apertured extruded film that does not exhibit significant macroscopic deformation out of the plane of the film would generally be described as planar. Thus, for an apertured, planar web the edge of the material at the apertures is substantially in the plane of the web, causing applied web stresses in the plane of the web to be coupled directly to tear initiation sites at the apertures.

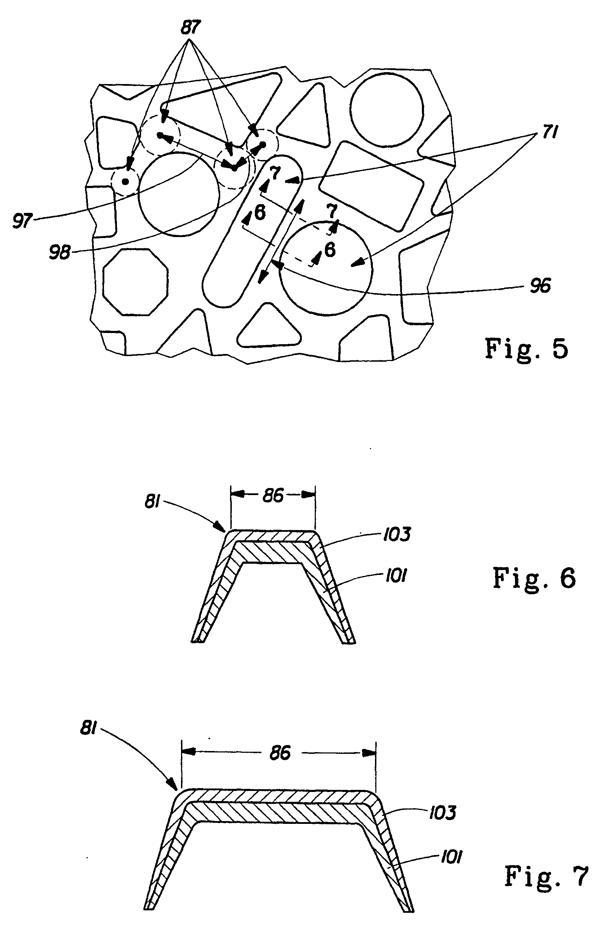

When macroscopically-expanded, the multilayer film of the elastomeric web of the present invention is formed into three-dimensional interconnecting members which may be described as channel-like. Their two-dimensional cross-section may also be described as "U-shaped", as in the aforementioned Radel et al. patent, or more generally as "upwardly concave-shaped", as disclosed in the aforementioned Goodman, Jr., et al. patent. "Upwardly concave-shaped" as used herein describes the orientation of the channel-like shape with relation to the surfaces of the elastomeric web, with the base generally in the first surface, and the legs of the channel extending from the base in the direction of the second surface, and with the channel opening being substantially in the second surface. In general, as described below with reference to FIG. 5, for a plane extending through the web orthogonal to the plane of the first surface and intersecting any two adjacent primary apertures, the resulting cross-section of an interconnecting member disposed between will exhibit a generally upwardly concave shape that may be substantially U-shaped.

One drawback associated with prior art macroscopically-expanded, three-dimensional, fluid pervious polymeric webs is that despite their superior breathability and fluid handling characteristics, they are not generally elastic enough to be used in the high-stretch portions of disposable absorbent articles, such as waistbands and leg cuffs. Non-apertured planar elasticized polymeric webs that do exhibit suitable extensibility for use on disposable absorbent articles have drawbacks as well. In particular, non-apertured planar elasticized polymeric webs do not have adequate porosity for use in body-contacting portions of an absorbent article.

Several means of rendering non-apertured planar elasticized polymeric webs more porous are known in the art, such as die punching, slitting, and hot-pin melt aperturing. However, when any of the above techniques is applied to thermoplastic elastomeric films, the increase in porosity is typically accompanied by a decrease in the degree of reliable elastic performance. Once perforated by conventional methods the edges of the apertures become sources of tear initiation sites as forces are applied to the web since they lie in the plane of applied stress. For common thermoplastic elastic films, web stress will initiate tears at the apertures which propagate over time leading to catastrophic failure of the film. If the aperture shapes are non-round, e.g., square, triangular, or other polygons, potential for tear initiation increases due to the stress concentrations at the angular intersection of sides.

Applicant has discovered that if a planar elastomeric web can be formed into a macroscopically-expanded, three-dimensional, fluid pervious web, generally in accordance with the teachings of the aforementioned '314 Radel et al. patent, the resulting three-dimensional elastomeric web exhibits the advantages of high porosity and high elasticity, as well as reliability, and high strength. Applicant has accomplished this in the present invention by utilizing a multilayer polymeric web comprising an elastomeric layer in combination with at least one skin layer, and forming the multilayer web into a macroscopically-expanded, three-dimensional configuration.

As used herein, the term "elastomer" is meant to include any material which is capable of being formed into a film layer and which exhibits elastomeric properties. "Elastomeric" means that the material will substantially resume its original shape after being stretched and, preferably, will sustain only small permanent set following deformation and relaxation. Preferably, the elastomeric layer itself is capable of undergoing from 50% to 1200% elongation at room temperature when in a non-apertured, planar condition. The elastomer can be either pure elastomers or a blend with an elastomeric phase or content that will still exhibit substantial elastomeric properties at ambient temperatures, including human body temperatures.

As used herein, "skin layer" refers to a layer of any semi-crystalline or amorphous polymer that is less elastic than the elastomeric layer. The skin layer of the present invention is preferably thinner and substantially less elastic than the elastomeric layer, and may in the limiting case be generally inelastic. There may be more than one skin layer used in conjunction with the elastomeric layer of the present invention, and it, or they, will generally modify the elastic properties of the elastomer. If more than one skin layer is used, the skin layers. may have the same or different material characteristics. Without being bound by theory it is believed that skin layers serve to maintain the three-dimensional structure of the formed elastomeric web of the present invention.

FIG. 2 is an enlarged partially segmented, perspective illustration of a macroscopically-expanded, three-dimensional, elastomeric web embodiment of the present invention, generally indicated as **80**. The geometrical configuration of the fluid-pervious, elastomeric web **80** is generally similar to that of prior art web **40,** illustrated in FIG. 1, and is generally in accordance with the teachings of the aforementioned '314 Radel et al. patent. Other suitable formed film configurations are described in U.S. Pat. No. 3,929,135, issued to Thompson on Dec. 30, 1975; U.S. Pat. No. 4,324,246 issued to Mullane, et al. on April 13, 1982; and U.S. Pat. No. 5,006,394 issued to Baird on April 9, 1991.

A preferred embodiment of an elastomeric web **80** of the present invention exhibits a multiplicity of primary apertures, e.g., primary apertures **71,** which are formed in plane **102** of the first surface **90** by a continuous network of interconnecting members, e.g., members **91, 92, 93, 94, 95** interconnected to one another. The shape of primary apertures **71** as projected on the plane of the first surface **90** are preferably in the shape of polygons, e.g., squares, hexagons, etc., in an ordered or random pattern. In a preferred embodiment each interconnecting member comprises a base portion, e.g., base portion **81,** located in plane **102,** and each base portion has a sidewall portion, e.g., sidewall portions **83**, attached to each edge thereof. The sidewall portions **83** extend generally in the direction of the second surface **85** of the web and intersect with side walls of adjoining interconnecting members. The intersecting sidewall portions are interconnected to one another intermediate the first and second surfaces of the web, and terminate substantially concurrently with one another to form a secondary aperture, e.g., secondary apertures **72** in the plane **106** of the second surface **85**.

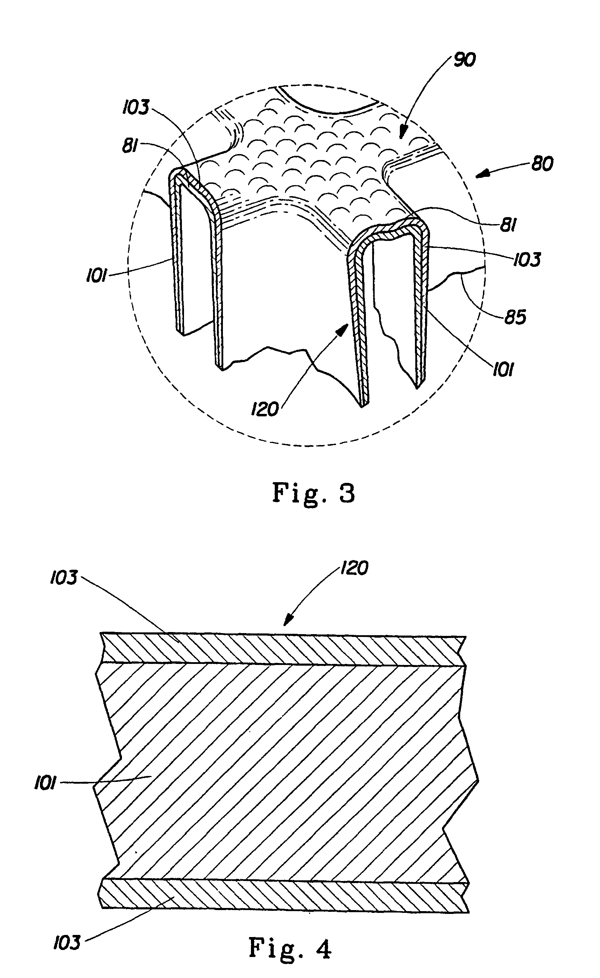

FIG. 3 is a further enlarged, partial view of a web of the type generally similar to web **80** of FIG. 2, but illustrating an alternative web construction according to the present invention. The multilayer polymeric formed film **120** of web **80** is preferably comprised of at least one elastomeric layer **101,** and at least one skin layer **103.** While FIG. 3 shows a two-layer embodiment with the skin layer **103** nearer the first surface **90,** it is believed that the order of layering of the formed film **120** is not limiting. While it is presently preferred that as shown in FIG. 3 the polymeric layers terminate substantially concurrently in the plane of the second surface, it is not presently believed to be essential that they do so, i.e., one or more layers may extend further toward the second surface than the others.

A particularly preferred multilayer polymeric film **120** of the web **80** is depicted in cross-section in FIG. 4, showing an elastomeric layer **101** interposed between two skin layers **103.** The elastomeric layer **101** preferably comprises a thermoplastic elastomer comprised of a substantially continuous amorphous matrix, with glassy or crystalline domains interspersed throughout, the domains acting as effective physical crosslinks and hence enabling the material to exhibit an elastic memory when subjected to an applied strain and subsequently released. Preferred elastomeric materials include block copolymers and blends thereof, such as styrene-butadiene-styrene or other such common styrenic block copolymers as are generally available from the Shell Company under the trade name "KRATON." Similarly, polyolefinic materials such as polyethylene and polypropylene generally of densities below about 0.9 g/cc could likewise exhibit the necessary thermoplastic character and resultant elastic behavior. The skin layers preferably comprise any thermoplastic polymer, especially polyolefinic polymers such as polyethylene or polypropylene, generally of density greater than about 0.9 g/cc which are capable of thermoplastic processing into thin films. The skin layer should have sufficient adhesion to the elastomeric layer such that it will not completely delaminate either before or after stretching of the web. A preferred method to produce the multilayer polymeric film **120** is coextrusion.

FIG. 5 is a plan view of alternative primary aperture shapes projected in the plane of the first surface of an alternative elastomeric web of the present invention. While a repeating pattern of uniform shapes is preferred, the shape of primary apertures, e.g., apertures **71**, may be generally circular, polygonal, or mixed, and may be arrayed in an ordered pattern or in a random pattern. Although not shown, it is understood that the projected shape may also be elliptical, tear-drop shaped, or any other shape, that is, the present invention is believed to be aperture-shape independent.

The interconnecting elements are inherently continuous, with contiguous interconnecting elements blending into one another in mutually-adjoining transition zones or portions, e.g., transition portions **87,** shown in FIG. 5. In general, transition portions are defined by the largest circle that can be inscribed tangent to any three adjacent apertures. It is understood that for certain patterns of apertures the inscribed circle of the transition portions may be tangent to more than three adjacent apertures. For illustrative purposes, interconnecting members may be thought of as beginning or ending substantially at the centers of the transition portions, such as interconnecting members **97** and **98**. Likewise, the sidewalls of the interconnecting members can be described as interconnecting to sidewalls of contiguous interconnecting members at areas corresponding to points of tangency where the inscribed circle of the transition portion is tangent to an adjoining aperture.

Exclusive of the transition zones, cross-sections transverse to a center line between the beginning and end of interconnecting members are preferably of generally uniform U-shape. However, the transverse cross-section need not be uniform along the entire length of the interconnecting member, and for certain aperture configurations it will not be uniform along most of its length. For example, as can be understood from the sectional illustrations of FIG. 5, for interconnecting member **96**, the width dimension, **86**, of the base portion **81** may vary substantially along the length of the interconnecting member. In particular, in transition zones or portions **87**, interconnecting members blend into contiguous interconnecting members and transverse cross-sections in the transition zones or portions may exhibit substantially non-uniform U-shapes, or no discernible U-shape.

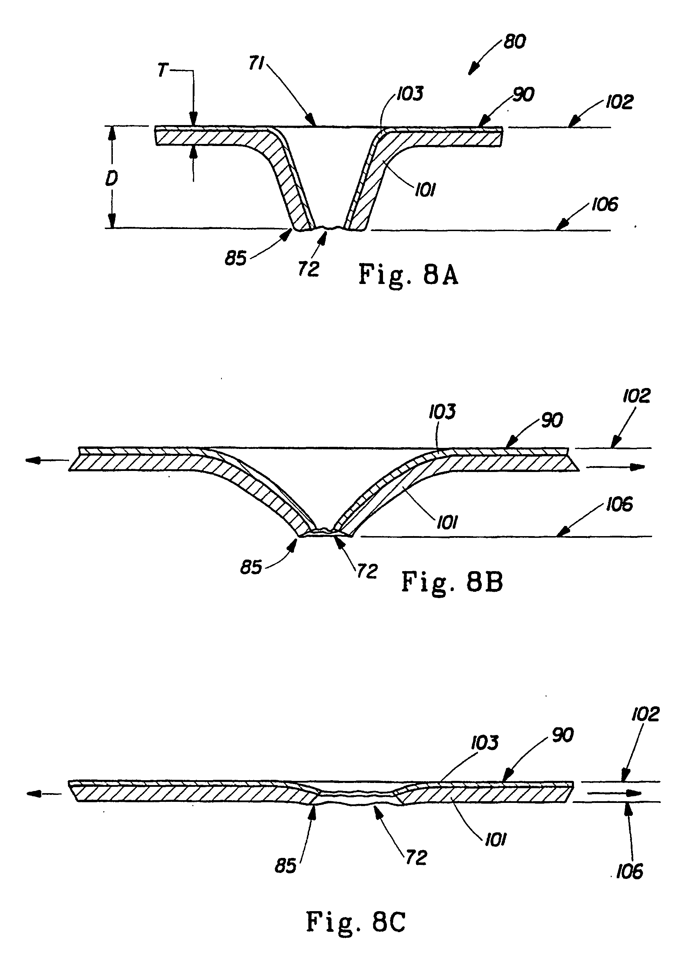

Without wishing to be bound by theory, it is believed that the web of the present invention is more reliable (i.e., resistant to catastrophic failure) when subjected to strain-induced stress due to the mechanism depicted schematically in cross section in FIGs. 8A-8C and pictorially in photomicrographs 9-11. FIG. 8A shows a primary aperture **71** in plane **102** of first surface **90,** and a secondary aperture **72** in plane **106** of second surface **85,** remote from plane **106** of first surface **90** of web **80** in an unstressed condition. When web **80** is stretched in the direction generally shown by arrows in FIG. 8B, first surface **90** is strained, and primary aperture **71** is likewise strained into a deformed configuration. However, the perimeter of primary aperture **71** is formed by the interconnecting members in a continuous first surface. Therefore, aperture **71** has no "edges" for tear initiation sites to compromise the elastic reliability of the web. The edges of the secondary aperture **72**, being possible tear initiation sites, do not experience appreciable strain-induced stresses until the web is strained to the point where plane **102** is no longer remote from plane **106** of the first surface **90**, as depicted in FIG. 8C. At the point where planes **102** and **106** are no longer remote, web **80** begins to behave essentially as a planar, apertured web.

It is instructive to consider the ratio of overall web depth, "D" in FIG. 8A, to film thickness, "T" in FIG. 8A of an unstretched elastomeric web. This ratio of D/T may be termed the draw ratio, as it pertains to the amount of film drawn out of the plane of the first surface due to the forming process of the present invention. Applicant believes that, in general, an increase in the draw ratio serves to increase resistance to tear by placing the second surface more remote from the first surface.

Without wishing to be bound by theory, it is believed that when the web **80** is strained or stretched, the elastomeric layer **101** of the present invention allows the base **81** of the interconnecting members forming a continuous web in the continuous first surface **90** to stretch. Skin layer **103** helps maintain the three-dimensional nature of the web, despite the applied stress, allowing the strain on the continuous first surface **90** and the resulting deformation of primary apertures **71** to be at least partially dissociated from the discontinuous second surface thereby minimizing strain at secondary apertures **72**. Therefore the strain-induced stress at the continuous first surface of the web is substantially decoupled from potential strain-induced stress at tear initiation sites on the discontinuous second surface, at least until the secondary apertures begin to enter the plane of the first surface. This substantial dissociation, or decoupling, of the strain-induced stress of the web from strain-induced stress at the secondary apertures significantly increases web reliability by allowing repeated and sustained strains of the web up to about 400% or more without failure of the web due to tear initiation at the apertures.

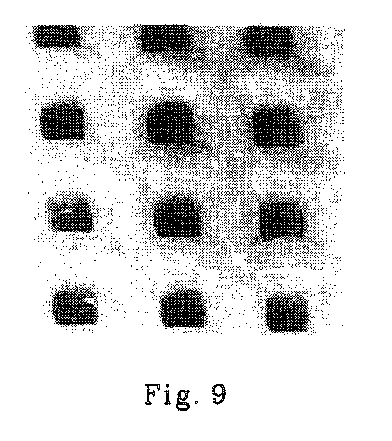

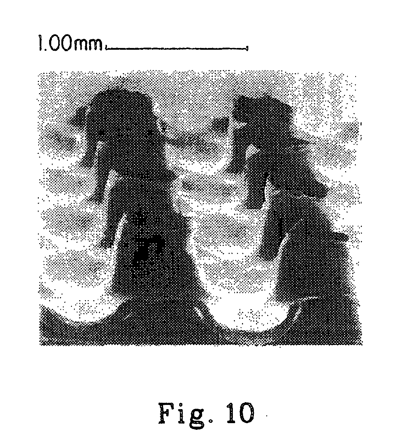

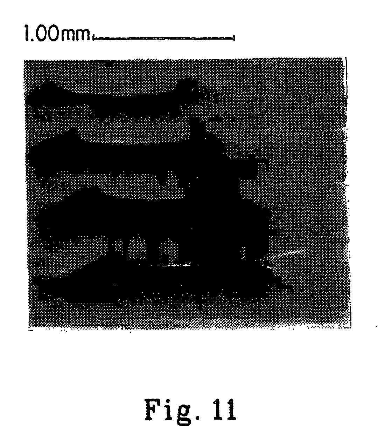

The photomicrographs of FIGs. 9-11 are believed to depict visually the mechanism described schematically in FIGS. 8A-8C. FIG. 9 is an optical photomicrograph showing the first surface and primary apertures of an embodiment of the present invention. In an as-formed, unextended configuration the continuous first surface of the web embodiment shown in FIG. 9 generally forms a regular pattern of 1 mm square primary apertures spaced about 1 mm apart on all sides. FIGs. 10 and 11 are scanning electron microscope photomicrographs showing the discontinuous second surface of the web embodiment of FIG. 9, shown at a slightly different scale. FIG. 10 shows the second surface of an elastomeric web generally in a plane remote from the plane of the first surface in an unstretched state. FIG. 11 shows the second surface of a web in a state of approximately 100% strain. As shown in FIG. 11, the edges of the secondary apertures remain remote from the plane of the first surface. Although some distortion of the secondary apertures takes place, the edges remain in a substantially unstressed condition. Again, it is this substantial decoupling of the strain-induced stress of the web from strain-induced stress at the secondary apertures that significantly increases web reliability.

The differential elastic behavior of planar multilayer films or fibers having a relatively less elastic skin layer stretched beyond its elastic limit is known in the art, as described in the aforementioned U.S. Patent to Krueger et al., as well as in U.S. Patent Nos. 5,376,430 to Swenson et al., issued Dec. 27, 1994 and 5,352,518 to Muramoto et al., issued Oct. 4, 1994. As shown in the art, upon recovery after extension beyond the elastic limits of the skin layer, the skin layer may form a microscopic microtexture of peak and valley irregularities, due to the resulting increased surface area of the skin layer relative to the elastomeric layer.

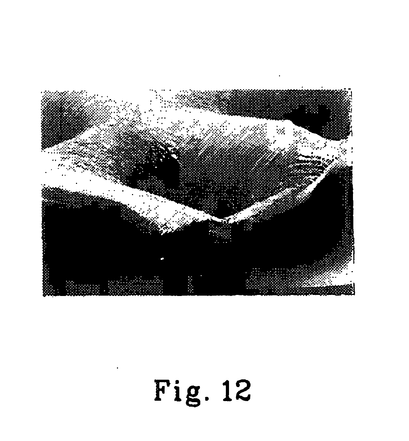

Likewise, when a web of the present invention is strained for the first time, the skin layer of the strained portion may be stressed beyond its elastic limit. The elastomeric layer allows the web to return substantially to its pre-stressed, macroscopic, three-dimensional configuration, but the portions of the skin layer that were stressed beyond their elastic limit may not return to a pre-stressed configuration due to the excess material created in the inelastic strain. Upon recovery after extension, the skin layer forms microscopic microtexture of peak and valley irregularities, more generally described as transversely-extending rugosities, as shown in the photomicrograph of FIG. 12. The rugosities form on the interconnecting members in substantially uniform patterns generally transverse to the direction of stretch, and generally radially disposed about the primary apertures. Depending on the degree of strain on the web, the rugosities may be limited to substantially the continuous first surface of the web, or more generally may extend over substantially the entire surface of the interconnecting members.

Without being bound by theory, it is believed that the transversely-extending rugosities are beneficial to the elastomeric web for at least two reasons. First, the rugosities impart a softer overall texture or feel to the elastomeric web. Second, the rugosities, being radially disposed to the primary apertures, and extending toward the secondary apertures, may facilitate better fluid handling characteristics when used as a body-contacting web of a disposable absorbent article.

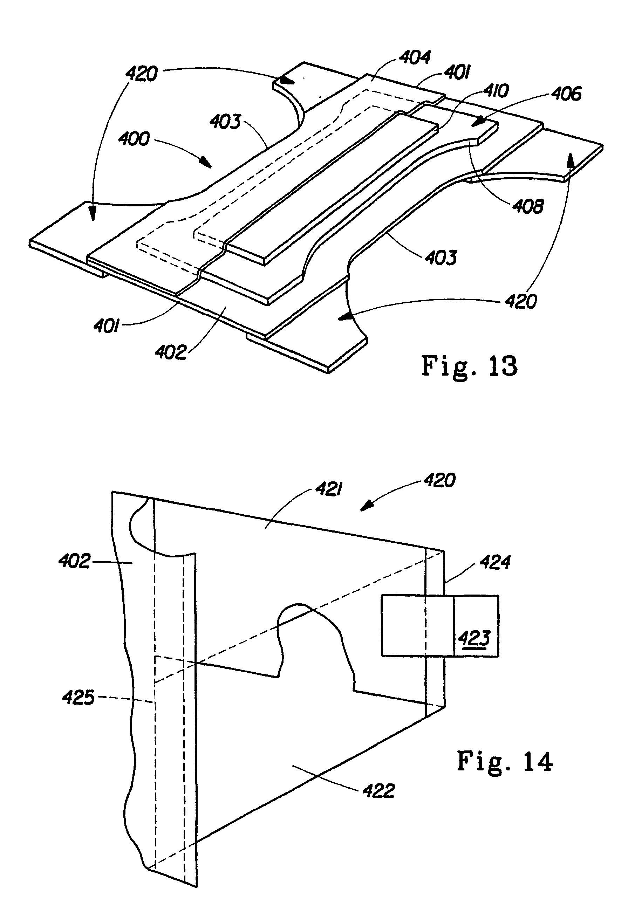

A representative embodiment of an elastomeric web of the present invention utilized in a disposable absorbent article in the form of a diaper **400,** is shown in FIG. 13. As used herein, the term "diaper" refers to a garment generally worn by infants and incontinent persons that is worn about the lower torso of the wearer. It should be understood, however, that the elastomeric web of the present invention is also applicable to other absorbent articles such as incontinent briefs, training pants, sanitary napkins, and the like. The diaper **400** depicted in FIG. 13 is a simplified absorbent article that could represent a diaper prior to its being placed on a wearer. It should be understood, however, that the present invention is not limited to the particular type or configuration of diaper shown in FIG. 13. A particularly preferred representative embodiment of a disposable absorbent article in the form of a diaper is taught in U.S. Pat. No. 5,151,092, to Buell et al., issued September 29, 1992.

FIG. 13 is a perspective view of the diaper **400** in its uncontracted state (i.e., with all the elastic induced contraction removed) with portions of the structure being cut-away to more clearly show the construction of the diaper **400.** The portion of the diaper **400** which contacts the wearer faces the viewer. The diaper **400** is shown in FIG. 13 to preferably comprise a liquid pervious topsheet **404;** a liquid impervious backsheet **402** joined with the topsheet **404;** and an absorbent core **406** positioned between the topsheet **404** and the backsheet **402.** Additional structural features such as elastic leg cuff members and fastening means for securing the diaper in place upon a wearer may also be included.

While the topsheet **404**, the backsheet **402**, and the absorbent core **406** can be assembled in a variety of well known configurations, a preferred diaper configuration is described generally in U.S. Patent 3,860,003 to Buell, issued January 14, 1975. Alternatively preferred configurations for disposable diapers herein are also disclosed in U.S. Patent 4,808,178 to Aziz et al., issued February 28, 1989; U.S. Patent 4,695,278 to Lawson, issued September 22, 1987; and U.S. Patent 4,816,025 to Foreman, issued March 28, 1989.

FIG. 13 shows a representative embodiment of the diaper **400** in which the topsheet **404** and the backsheet **402** are co-extensive and have length and width dimensions generally larger than those of the absorbent core **406**. The topsheet **404** is joined with and superimposed on the backsheet **402** thereby forming the periphery of the diaper **400**. The periphery defines the outer perimeter or the edges of the diaper **400**. The periphery comprises the end edges **401** and the longitudinal edges **403.**

The size of the backsheet **402** is dictated by the size of the absorbent core **406** and the exact diaper design selected. In a preferred embodiment, the backsheet **402** has a modified hourglass-shape extending beyond the absorbent core **406** a minimum distance of at least about 1.3 centimeters to about 2.5 centimeters (about 0.5 to about 1.0 inch) around the entire diaper periphery.

The topsheet **404** and the backsheet **402** are joined together in any suitable manner. As.used herein, the term "joined" encompasses configurations whereby the topsheet **404** is directly joined to the backsheet **402** by affixing the topsheet **404** directly to the backsheet **402**, and configurations whereby the topsheet **404** is indirectly joined to the backsheet **402** by affixing the topsheet **404** to intermediate members which in turn are affixed to the backsheet **402.** In a preferred embodiment, the topsheet **404** and the backsheet **402** are affixed directly to each other in the diaper periphery by attachment means (not shown) such as an adhesive or any other attachment means as known in the art. For example, a uniform continuous layer of adhesive, a patterned layer of adhesive, or an array of separate lines or spots of adhesive can be used to affix the topsheet **404** to the backsheet **402.**

End edges **401** form a waist region, which in a preferred embodiment comprise a pair of elastomeric side panels **420,** which extend laterally from end edges **401** of diaper **400** in an extended configuration. In a preferred embodiment elastomeric side panels **420** comprise the elastomeric web of the present invention. In an especially preferred embodiment, when used as elastomeric side panels, the web of the present invention is further processed to form a composite laminate by bonding it on one, or preferably both sides thereof, with fibrous nonwoven materials to form a soft, compliant elasticized member, utilizing methods known in the art. such as adhesive bonding.

Fibrous nonwoven materials suitable for use in a composite laminate of the present invention include nonwoven webs formed of synthetic fibers (such as polypropylene, polyester, or polyethylene), natural fibers (such as wood, cotton, or rayon), or combinations of natural and synthetic fibers. Suitable nonwoven materials can be formed by various processes such as carding, spun-bonding, hydro-entangling, and other processes familiar to those knowledgeable in the art of nonwovens. A presently preferred fibrous nonwoven material is carded polypropylene, commercially available from Fiberweb of Simpsonville, S.C.

Fibrous nonwoven materials may be bonded to the elastomeric web by any one of various bonding methods known in the art. Suitable bonding methods include adhesive bonding such as by a uniform continuous layer of adhesive, a patterned layer of adhesive, or an array of separate lines, spirals, or spots of adhesive, or other methods such as heat bonds, pressure bonds, ultrasonic bonds, dynamic mechanical bonds, or any other suitable attachment means or combinations of these attachment means as are known in the art. Representative bonding methods are also described in PCT application WO 93/09741, entitled "Absorbent Article Having a Nonwoven and Apertured Film Coversheet", published May 27, 1993 naming Aziz et al. as inventors.

After bonding to a fibrous nonwoven material, the composite web may tend to be less elastomeric due to the relative inelasticity of the bonded nonwoven. To render the nonwoven more elastic, and to restore elasticity to the composite laminate, the composite web may be processed by methods and apparatus used for elasticizing "zero strain" laminates by incremental stretching, as disclosed in the aforementioned Buell et al. '092 patent, as well as the aforementioned Weber et al. '897, Buell et al. '793, and Weber et al. '679 patents. The resulting elasticized "zero-strain" composite web then has a soft, cloth-like feel for extended use and comfortable fit in an absorbent garment.

Side panels **420** may be joined to the diaper in any suitable manner known in the art. For example, as shown in FIG. 13, side panels **420** may be affixed directly to the backsheet **402** by attachment means (not shown) such as an adhesive or any other attachment means as known in the art. A particularly preferred configuration for side panels **420** is shown in FIG. 14, a configuration which is more fully disclosed in commonly assigned, co-pending US-A-566 9897 (U.S. Pat. Applications, S.N. 08/707,346), by LaVon et al., filed September 3, 1996, and EP-A-729 332 (S.N. 08/155,048) filed November, 19, 1993.

As shown in FIG. 14, side panel **420** is preferably comprised of two webs or strips, **421** and **422.** Strips **421** and **422** may be two discrete strips, or alternatively they may be formed by bending a single strip at leading edge **424,** and offsetting the two resulting strip lengths in a non-parallel manner. If two discrete strips are used, they may be bonded, as with suitable adhesive, to one another at leading edge **424,** and may simultaneously be bonded to tape tab **423**. Side panel 420 may be bonded to backsheet **402** at bond area **425** in any suitable manner, and particularly as disclosed in the aforementioned LaVon et al. '346 patent application. While it is not necessary that the pairs of side panels be identical, they are preferably mirror images one of the other.

Tape fasteners, e.g., tape tab **423**, are typically applied to at least one pair of elastomeric side panels **420** to provide a fastening means for holding the diaper on the wearer. The tape tab fasteners can be any of those well known in the art, such as the fastening tape disclosed in the aforementioned Buell '092 patent, and U.S. Patent 3,848,594 to Buell, issued November 19, 1974, the disclosure of which is hereby incorporated by reference.

Other elastic members (not shown), of the present invention may be disposed adjacent the periphery of the diaper **400**. Elastic members are preferably along each longitudinal edge **403,** so that the elastic members tend to draw and hold the diaper **400** against the legs of the wearer. In addition, the elastic members can be disposed adjacent either or both of the end edges **401** of the diaper **400** to provide a waistband as well as or rather than leg cuffs. For example, a suitable waistband is disclosed in U.S. Patent 4,515,595 to Kievit et al., issued May 7, 1985. In addition, a method and apparatus suitable for manufacturing a disposable diaper having elastically contractible elastic members is described in U.S. Patent 4,081,301 to Buell, issued March 28, 1978.

The elastic members are secured to the diaper **400** in an elastically contractible condition so that in a normally unrestrained configuration, the elastic members effectively contract or gather the diaper **400.** The elastic members can be secured in an elastically contractible condition in at least two ways. For example, the elastic members can be stretched and secured while the diaper **400** is in an uncontracted condition. In addition, the diaper **400** can be contracted, for example, by pleating, and the elastic members secured and connected to the diaper **400** while the elastic members are in their relaxed or unstretched condition. The elastic members may extend along a portion of the length of the diaper **400.** Alternatively, the elastic members can extend the entire length of the diaper **400,** or any other length suitable to provide an elastically contractible line. The length of the elastic members is dictated by the diaper design.

The elastic members can be in a multitude of configurations. For example, the width of the elastic members can be varied from about 0.25 millimeters (0.01 inches) to about 25 millimeters (1.0 inch) or more; the elastic members can comprise a single strand of elastic material or can comprise several parallel or non-parallel strands of elastic material; or the elastic members can be rectangular or curvilinear. Still further, the elastic members can be affixed to the diaper in any of several ways which are known in the art. For example, the elastic members can be ultrasonically bonded, heat and pressure sealed into the diaper **400** using a variety of bonding patterns or the elastic members can simply be glued to the diaper **400**.

As shown in FIG. 13, the absorbent core **406** preferably includes a fluid distribution member **408**. In a preferred configuration such as depicted in FIG. 13, the absorbent core **406** preferably further includes an acquisition layer or member **410** in fluid communication with the fluid distribution member **408** and located between the fluid distribution member **408** and the topsheet **404**. The acquisition layer or member **410** may be comprised of several different materials including nonwoven or woven webs of synthetic fibers including polyester, polypropylene, or polyethylene, natural fibers including cotton or cellulose, blends of such fibers, or any equivalent materials or combinations of such materials.

In use, the diaper **400** is applied to a wearer by positioning the back waistband region under the wearer's back, and drawing the reminder of the diaper **400** between the wearer's legs so that the front waistband region is positioned across the front of the wearer. The elastomeric side panels are then extended as necessary for comfort and fit, and the tape-tab or other fasteners are then secured preferably to outwardly facing areas of the diaper **400**. By having side panels **420** comprising an elastomeric web of the present invention, the diaper may be adapted for differing sizes of children, for example, in a manner providing for close, comfortable fit with breathability.

While a disposable diaper is shown as a preferred embodiment of a garment comprising an elastomeric web of the present invention, this disclosure is not meant to be limiting to disposable diapers. Other disposable garments may also incorporate an elastomeric web of the invention in various parts to give added comfort, fit and breathability. As well, it is contemplated that even durable garments such as undergarments and swimwear may benefit from the durable porous, extensible characteristics of an elastomeric web of the present invention.

The multilayer film **120** of the present invention may be processed using conventional procedures for producing multilayer films on conventional coextruded film-making equipment. In general, polymers can be melt processed into films using either cast or blown film extrusion methods both of which are described in "Plastics Extrusion Technology"-2nd Ed., by Allan A. Griff (Van Nostrand Reinhold-1976), which is hereby incorporated herein by reference. Cast film is extruded through a linear slot die. Generally, the flat web is cooled on a large moving polished metal roll. It quickly cools, and peels off the first roll, passes over one or more auxiliary rolls, then through a set of rubber-coated pull or "haul-off" rolls, and finally to a winder.

In blown film extrusion the melt is extruded upward through a thin annular die opening. This process is also referred to as tubular film extrusion. Air is introduced through the center of the die to inflate the tube and causes it to expand. A moving bubble is thus formed which is held at constant size by control of internal air pressure. The tube of film is cooled by air blown through one or more chill rings surrounding the tube. The tube is next collapsed by drawing it into a flattened frame through a pair of pull rolls and into a winder.

A coextrusion process requires more than one extruder and either a coextrusion feedblock or a multi-manifold die system or combination of the two to achieve the multilayer film structure. U.S. Pat. Nos. 4,152,387 and 4,197,069, issued May 1, 1979 and April 8, 1980, respectively, both to Cloeren, disclose the feedblock principle of coextrusion. Multiple extruders are connected to the feedblock which employs moveable flow dividers to proportionally change the geometry of each individual flow channel in direct relation to the volume of polymer passing through said flow channels. The flow channels are designed such that at their point of confluence, the materials flow together at the same flow rate and pressure eliminating interfacial stress and flow instabilities. Once the materials are joined in the feedblock, they flow into a single manifold die as a composite structure. It is important in such processes that the melt viscosities and melt temperatures of the material do not differ too greatly. Otherwise flow instabilities can result in the die leading to poor control of layer thickness distribution in the multilayer film.

An alternative to feedblock coextrusion is a multi-manifold or vane die as disclosed in aforementioned U.S. Pat. Nos. 4,152,387, 4,197,069, as well as U.S. No. 4,533,308, issued August 6, 1985 to Cloeren. Whereas in the feedblock system melt streams are brought together outside and prior to entering the die body, in a multi-manifold or vane die each melt stream has its own manifold in the die where the polymers spread independently in their respective manifolds. The melt streams are married near the die exit with each melt stream at full die width. Moveable vanes provide adjustability of the exit of each flow channel in direct proportion to the volume of material flowing through it, allowing the melts to flow together at the same linear flow rate, pressure, and desired width.

Since the melt flow properties and melt temperatures of polymers vary widely, use of a vane die has several advantages. The die lends itself toward thermal isolation characteristics wherein polymers of greatly differing melt temperatures, for example up to 175° F. (80° C.), can be processed together.

Each manifold in a vane die can be designed and tailored to a specific polymer. Thus the flow of each polymer is influenced only by the design of its manifold, and not forces imposed by other polymers. This allows materials with greatly differing melt viscosities to be coextruded into multilayer films. In addition, the vane die also provides the ability to tailor the width of individual manifolds, such that an internal layer can be completely surrounded by the outer layer leaving no exposed edges. The aforementioned patents also disclose the combined use of feedblock systems and vane dies to achieve more complex multilayer structures.

The multilayer films of the present invention may comprise two or more layers, at least one of the layers being elastomeric. Although an elastomeric layer is generally substantially joined to one or two skin layers, it is contemplated that multiple elastomeric layers may be utilized, each elastomeric layer being joined to one or two skin layers. Three-layer films, like multilayer film **120** shown in FIG. 4, preferably comprise a central elastomeric core **101** that may comprise from about 10 to 90 percent of the total thickness of the film. Outer skin layers **103** are generally, but not necessarily, identical and may comprise from about 5 to 45 percent of the total thickness of the film. Tie layers, when employed, may each comprise from bout 5 to 10 percent of the total film thickness. In a three-layer film, core layer **101** has opposed first and second sides, one side being substantially continuously joined to one side of each outer skin layer **103** prior to the application of applied stress to the web.

After the multilayer elastomeric film has been coextruded it is preferably fed to a forming structure for aperturing and cooling, thereby producing a macroscopically-expanded, three-dimensional, apertured elastomeric web of the present invention. In general the film may be formed by drawing such film against a forming screen or other forming structure by means of a vacuum and passing an air or water stream over the outwardly posited surface of the film. Such processes are described in the aforementioned Radel et al. patent as well as in U.S. Pat. No. 4,154,240, issued to Lucas et al.. Forming a three-dimensional elastomeric web may alternatively be accomplished by applying a liquid stream with sufficient force and mass flux to cause the web formation as disclosed in commonly assigned U.S. Pat. No. 4,695,422, issued to Curro et al.. Alternatively, the film can be formed as described in commonly assigned U.S. Pat. No. 4,552,709 to Koger et al.. Preferably the elastomeric web is uniformly macroscopically expanded and apertured by the method of supporting the forming structure in a fluid pressure differential zone by a stationary support member as taught by commonly assigned U.S. Pat. Nos. 4,878,825 and 4,741,877, both to Mullane, Jr..

Although not shown, the process of the present invention, using a conventional forming screen having a woven wire support structure, would also form a web within the scope of the present invention. The knuckles of a woven wire forming screen would produce a macroscopically-expanded, three-dimensional web having a pattern of undulations in the first surface, the undulations corresponding to the knuckles of the screen. However, the undulations would remain generally in the plane of the first surface, remote from the plane of the second surface. The cross-section of the interconnecting members would remain generally upwardly concave-shaped with the interconnecting sidewalls of the interconnecting members terminating to form secondary apertures substantially in the plane of the second surface.

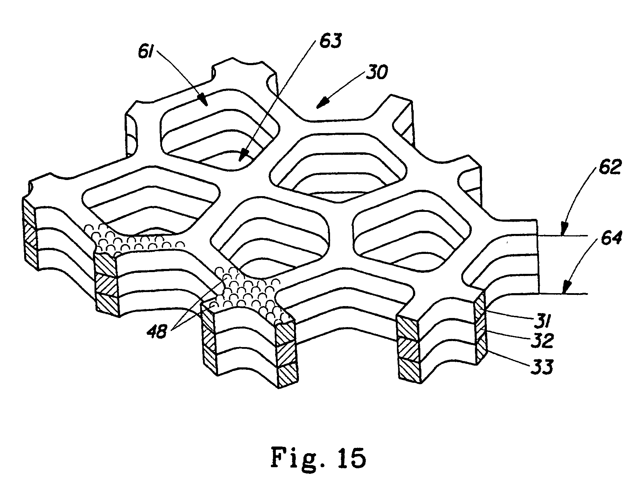

A particularly preferred forming structure comprises a photoetched laminate structure as shown in FIG. 15, showing an enlarged, partially segmented, perspective illustration of a photoetched laminate structure of the type used to form plastic webs of the type generally illustrated in FIG. 2. The laminate structure **30** is preferably constructed generally in accordance with the teachings of the aforementioned Radel et al. patent, and is comprised of individual lamina **31, 32**, and **33**. A comparison of FIG. 3 with the elastomeric web **80** shown in FIG. 2 reveals the correspondence of primary aperture **71** in plane **102** of the elastomeric web **80** to opening **61** in the uppermost plane **62** of the photoetched laminate structure **30.** Likewise, aperture opening **72** in plane **106** of elasfomeric web **80** corresponds to opening **63** in lowermost plane **64** of photoetched laminate structure **30.**

The uppermost surface of photoetched laminate structure **30** located in uppermost plane **62** may be provided with a microscopic pattern of protuberances **48** without departing from the scope of the present invention. This is preferably accomplished by applying a resist coating which corresponds to the desired microscopic pattern of surface aberrations to the top side of a planar photoetched lamina **31**, and thereafter initiating a second photoetching process. The second photoetching process produces a lamina **31** having a microscopic pattern of protuberances **48** on the uppermost surface of the interconnected elements defining the pentagonally shaped apertures, e.g., aperture **41** The microscopic pattern of protuberances does not substantially remove the first surface from the plane of the first surface. The first surface is perceived on a macroscopic scale, while the protuberances are perceived on a microscopic scale. Construction of a laminate structure employing such a pattern of protuberance **48** on its uppermost layer is generally disclosed in the aforementioned Ahr et al. patent.

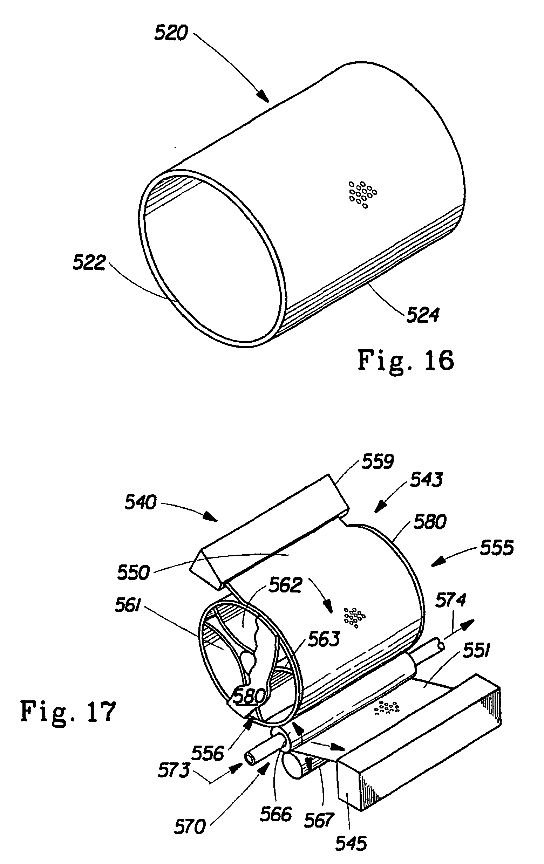

Processes for constructing laminate structures of the type generally disclosed in FIG. 2 are disclosed in the aforementioned Radel et al. patent. The photoetched laminate structures are preferably rolled by conventional techniques into a tubular forming member **520**, as illustrated generally in FIG. 16 and their opposing ends joined generally in accordance with the teachings of Radel et al. to produce a seamless tubular forming member **520.**

The outermost surface 524 of the tubular forming member **520** is utilized to form the multilayer elastomeric web brought in contact therewith while the innermost surface **522** of the tubular member generally does not contact the plastic web during the forming operation. The tubular member may, in a preferred embodiment of the present invention, be employed as the farming surface on debossing/perforating cylinder **555** in a process of the type described in detail in the aforementioned Lucas et al. patent. A particularly preferred apparatus **540** of the type disclosed in said patent is schematically shown in FIG. 17. It includes debossing and perforating means **543**, and constant tension film forwarding and winding means **545** which may, if desired, be substantially identical to and function substantially identically to the corresponding portions of the apparatus shown and described in U.S. Pat. No. 3,674,221 issued to Riemersma on July 4, 1972. The frame, bearing, supports and the like which must necessarily be provided with respect to the functional members of apparatus **540** are not shown or described in detail in order to simplify and more clearly depict and disclose the present invention, it being understood that such details would be obvious to persons of ordinary skill in the art of designing plastic film converting machinery.

Briefly, apparatus **540,** schematically shown in FIG. 17, comprises means for continuously receiving a ribbon of thermoplastic film **550** from coextruder **559,** for example, and converting it into a debossed and perforated film **551**. Film **550** is preferably supplied directly from the coextrusion process while still above its thermoplastic temperature so as to be vacuumed formed prior to cooling. Alternatively, film 550 may be heated by directing hot air jets against one surface of the film while applying vacuum adjacent the opposite surface of the film. To maintain sufficient control of film 550 to substantially obviate wrinkling and/or macroscopically distending the film, apparatus **540** comprises means for maintaining constant machine direction tension in the film both upstream and downstream of a zone where the temperature is greater than the thermoplastic temperature of the film, but in which zone there is substantially zero machine direction and cross-machine direction tension tending to macroscopically distend the film. The tension is required to control and smooth a running ribbon of thermoplastic film; the zero tension zone results from the film in the zone being at a sufficiently high temperature to enable debossing and perforating the film.

As can be seen in FIG. 17, the debossing and perforating means **543** includes a rotatably mounted debossing perforating cylinder **555** having closed ends **580**, a nonrotating triplex vacuum manifold assembly **556** and optional hot air jet means (not shown). The triplex vacuum manifold assembly **556** comprises three manifolds designated **561, 562,** and **563.** Also shown in FIG. 17 is a power rotated lead-off/chill roll **566** and a soft-face (e.g., low density neoprene) roll **567** which is driven with the chill roll. Briefly, by providing means (not shown) for independently controlling the degree of vacuum in the three vacuum manifolds, a thermoplastic ribbon of film running circumferentially about a portion of the debossing-perforating cylinder **555** is sequentially subjected to a first level of vacuum by manifold **561**, a second level of vacuum by manifold **562**, and a third level of vacuum by manifold **563**. As will be described more fully hereinafter, the vacuum applied to the film by manifold **561** enables maintaining upstream tension in the film, vacuum applied by manifold **562** enables perforating the film, and vacuum applied by manifold **563** enables cooling the film to below its thermoplastic temperature and enables establishing downstream tension therein. If desired, the film contacting surface of the debossing-perforating cylinder **555** may be preheated prior to reaching vacuum manifold **562** by means well known in the art (and therefore not shown) to facilitate better conformance of plastic films comprised of flow-resistant polymers during the debossing operation. The nip **570** intermediate chill roll **566** and the soft-face roll **567** is only nominally loaded because high pressure would iron-out the three-dimensional debossments which are formed in the film in the aforementioned manner. However, even nominal pressure in nip **570** helps the vacuum applied by manifold **563** to isolate downstream tension (i.e., roll winding tension) from the debossing-perforating portion of the debossing-perforating cylinder **555**, and enables the nip **570** to peel the debossed and perforated film from the debossing-perforating cylinder **555**. Moreover, while vacuum drawn ambient air passing through the film into manifold **563** will normally cool the film to below its thermoplastic temperature, the passage of coolant through the chill roll as indicated by arrows **573, 574** in FIG. 17 will enable the apparatus to handle thicker films or be operated at higher speeds.

The debossing and perforating means **543** comprises the rotatably mounted debossing-perforating cylinder **555**, means (not shown) for rotating the cylinder **555** at a controlled peripheral velocity, the non-rotating triplex vacuum manifold assembly **556** inside the debossing-perforating cylinder **555**, means (not shown) for applying controlled levels of vacuum inside the three vacuum manifolds **561, 562** and **563** comprising the triplex manifold assembly **556**, and optional hot air jet means (not shown). The debossing-perforating cylinder **555** may be constructed by generally following the teachings of the aforementioned Lucas et al. patent, but substituting a tubular laminate forming surface of the present invention for the perforated tubular forming surface disclosed therein.

To summarize, the first vacuum manifold **561,** and the third vacuum manifold **563** located within the debossing-perforating cylinder **555** enable maintaining substantially constant upstream and downstream tension, respectively, in a running ribbon of film while the intermediate portion of the film adjacent the second vacuum manifold **562** within the debossing-perforating cylinder **555** is subjected to tension vitiating heat and vacuum to effect debossing and perforating of the film.

While a preferred application of the disclosed photoetched laminate structure is in a vacuum film forming operation as generally outlined in the aforementioned commonly assigned patent issued to Lucas et al., it is anticipated that photoetched laminate forming structures of the present invention could be employed with equal facility to directly form a three-dimensional plastic structure of the present invention. Such a procedure would involve applying a heated fluid plastic material, typically a thermoplastic resin, directly to the forming surface applying a sufficiently great pneumatic differential pressure to the heated fluid plastic material to cause said material to conform to the image of the perforate laminate forming surface, allowing the fluid material to solidify, and thereafter removing the three-dimensional plastic structure from the forming surface.

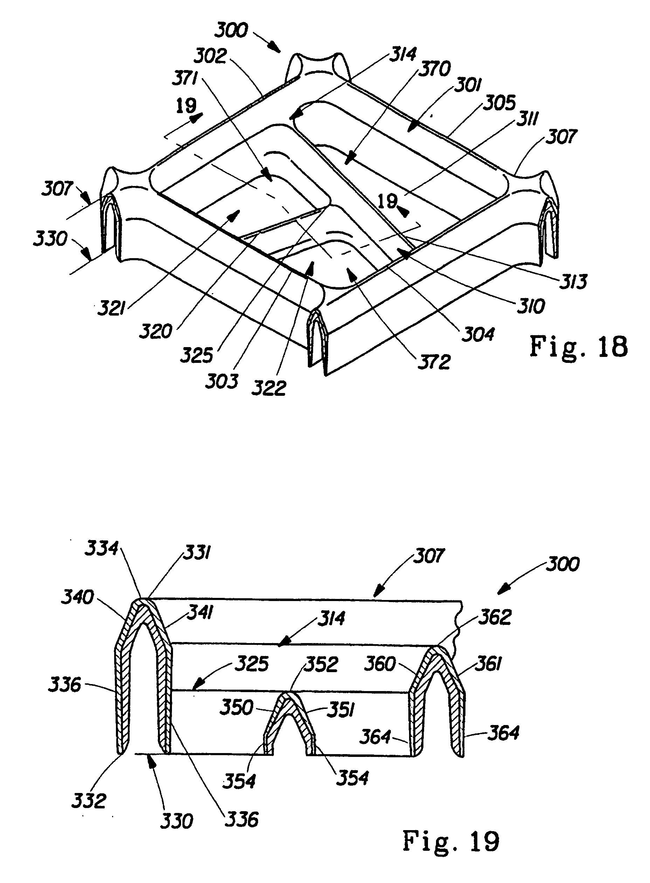

While the web embodiment generally disclosed in FIG. 2 represents a particularly preferred embodiment of the present invention, any number of interconnecting members may be employed within web structures of the present invention, e.g., secondary, tertiary, etc. An example of such a structure is shown in FIG. 18 which also shows a variant of upwardly concave-shaped cross-sections of interconnecting members. The aperture network shown in FIG. 18 comprises a primary aperture **301** formed by a multiplicity of primary interconnecting elements, e.g., elements **302, 303, 304** and **305** interconnected to one another in uppermost plane **307** of the web **300**, said opening being further subdivided into smaller secondary apertures **310** and **311** by secondary interconnecting member **313** at an intermediate plane **314.** Primary aperture **310** is further subdivided by tertiary interconnecting member **320** into even smaller secondary apertures **321** and **322**, respectively, at a still lower plane **325** within web **300.** As can be seen from FIG. 19, which is taken along section line 19-19 of FIG. 18, planes **314** and **325** are generally parallel to and located intermediate uppermost plane **307** and lowermost plane **330.**

In the web embodiment illustrated in FIGs. 17 and 18, the primary and secondary interconnecting members are further connected to intersecting tertiary interconnecting members, e.g., tertiary interconnecting members **320**, which also exhibit a generally upwardly concave-shaped cross-section along their length. The intersecting primary, secondary and tertiary interconnecting members terminate substantially concurrently with one another in the plane **330** of the second surface **332** to form a multiplicity of openings or apertures in the web's second surface, e.g., apertures **370, 371 and 372.** It is clear that the interconnected primary, secondary and tertiary interconnecting members located between the first and second surfaces of the web **300** form a closed network connecting each of the primary apertures, e.g., aperture **301** in the first surface **331** of the web, with a multiplicity of secondary apertures, e.g., apertures **370, 371** and **372**, in the second surface **332** of the web.

As will be appreciated, the generally upwardly concave-shaped interconnecting members utilized in webs of the present invention may be substantially straight along their entire length. Alternatively, they may be curvilinear, they may comprise two or more substantially straight segments or they may be otherwise oriented in any desired direction along any portion of their length. There is no requirement that the interconnecting members be identical to one another. Furthermore, the aforementioned shapes may. be combined in any desired fashion to produce whatever pattern is desired. Regardless of the shape ultimately selected, the upwardly concave-shaped cross-section which exists along the respective lengths of the interconnected interconnecting members helps impart resilience to elastomeric webs of the present invention, as well as three-dimensional standoff.

It will be obvious to those skilled in the art that various changes and modifications can be made without departing from the spirit and scope of the present invention. For example, in the event it is desired to produce webs of the present invention wherein a predetermined portion of the web is capable of preventing fluid transmission, it is feasible to perform the debossing operation without causing rupture of the web in its second surface. Commonly assigned U.S. Pat. No. 4,395,215 issued to Bishop on July 26, 1983 and commonly assigned U.S. Pat No. 4,747,991 issued to Bishop on May 31, 1988, fully disclose how to construct tubular forming structures which are capable of producing three-dimensionally expanded films which are uniformly debossed, but apertured only in predetermined areas.

It is believed that the description contained herein will enable one skilled in the art to practice the present invention in many and varied forms. Nonetheless, the following exemplary embodiment and analytical method is set forth for the purpose of illustrating the beneficial elastic reliability of a particularly preferred elastomeric web of the present invention.

### EXAMPLE

A planar coextruded multilayer film was produced and then formed by methods disclosed above into an elastomeric web of the present invention, generally as shown in the photomicrographs of FIGs. 9-11. The coextruded film comprised three layers as depicted in FIG. 4, with the elastomeric layer comprising styrenic triblock copolymer and the skin layers comprising polyolefinic material. The total gauge of the film was approximately 0.09 mm (3.5 mils) with the elastomeric layer being approximately 75-90% of the thickness prior to forming into a three-dimensional elastomeric web. While being difficult to measure accurately, the gauge of the three-dimensional elastomeric web from the first surface to the second surface was on the order of 1 mm, for a draw ratio of approximately 10:1. In an as-formed, unextended configuration the continuous first surface generally formed a regular pattern of 1 mm square fluid-permeable apertures spaced about 1 mm apart on all sides. The secondary apertures were slightly smaller than the primary apertures giving the elastomeric web an open apertured area of approximately 12-16%.

The exemplary elastomeric web of the present invention exhibited reliable elastic performance by repeated and sustained web strains of up to about 400% or more without significant affect on web elasticity or porosity. In general, the web exhibited a higher modulus in the first extension as the skin layers experienced inelastic strain. Thereafter it is believed that microscopic rugosities formed on the interconnecting members in the regions of inelastic skin layer strain, which resulted in a lower and generally constant web modulus.

In a particularly preferred method of characterizing the desirable elastic behavior of the exemplary elastomeric web a notched tensile test by the analytical method below was used to determine work to break characteristics. Work to break is essentially the area under the stress-strain curve produced while straining from zero strain to break. This analytical method, as outlined below, was chosen to be especially useful in understanding the notch sensitivity of the exemplary elastomeric web and its ability to resist catastrophic failure due to notch propagation during extension. Exemplary elastomeric web samples of the present invention required greater than 40 Kg-mm average work to break. By way of example, when samples of the unapertured planar coextruded film used to form the exemplary three-dimensional web were tested by the same analytical method, they required only about 8 Kg-mm average work to break.

### ANALYTICAL METHOD

The following is a representative analytical method which has been found suitable for determining the performance of porous elastomeric webs in accordance with the present invention.

### Notched Tensile Test

This test method is based on ASTM D882-83 and measures the work-to-break characteristic of notched, apertured films or webs. The method is applicable to a wide range of polymer films, webs, and composite structures.

### Hardware Components

Electronic tensile tester: A tensile tester with a calibrated universal constant rate of tensile elongation and data collection capability is required. The tester must be equipped with a suitable load cell to measure tensile loading within 25% to 75% of the capacity of the load cell and facilitate data collection. The tester must be equipped with gripping jaws designed for web testing so that web failure in testing occurs within the web and not at the point of gripping. Suitable equipment is well known in the art, and may be obtained from Instron Engineering Corp., Canton MA, or SINTECH-MTS Systems Corp., Eden Prairie, MN.

### Software Components

Work-to-break calculation: Software for computation of work to break may be utilized. The software calculates the area under the stress/strain curve output of the tensile tester, and may be accomplished in various ways known in the art. For example, the value for work-to-break may be calculated by integrating over the stress/strain curve produced by the tensile tester. In the alternative, the work-to-break may be manually calculated in any of many ways known in the art for finding the area under a geometric curve.

### Preparation of Instrumentation and Test Sample

Crosshead speed: 20 inches/minute.

Gauge length: Samples of web material are prepared in strips one inch wide, with a gauge length of 2 inches.

Notching: Each sample of web material is notched with a new razor blade by making a one-half inch long transverse slit across the apertures near the middle of the gauge length.

### Procedure

The notched web sample is inserted into the jaws of the calibrated tensile tester and loaded so to eliminate any slack in the sample. The notched sample is then pulled to failure while the data collection devices record the stress/strain data and the work-to-break calculations are accomplished.

## Claims

1. A porous, macroscopically-expanded, three-dimensional web (80) having a continuous first surface (90) and a discontinuous second surface (85), said first surface (90) and said second surface (85) being located in substantially parallel planes (102,106) which are remote from one another, **characterized in that** said web (80) is elastomeric, said web (80) comprising a multiplicity of interconnecting members (91,92,93,94,95) of upwardly concave-shaped cross-section for substantially decoupling applied strain-induced stresses in said first surface (90) from said second surface (85), said interconnecting members (91,92,93 94,95) defining at least one primary aperture (71) in said first surface (90) and having interconnected sidewall portions (83) extending in the direction of said second surface (85), said interconnected sidewall portions (83) terminating to form at least one secondary aperture (72) having tear initiation sites in said second surface (85) of said web (80), **characterized in that** said web (80) and said interconnecting members (91,92,93,94,95) are elastic, such that strain-induced stresses on said web (80) are substantially decoupled from tear initiation sites in said secondary apertures (72), at least until said second surface (85) is no longer remote from said plane (102) of said first surface (90) when said stresses are applied to said web (80).

2. A web (80) as claimed in Claim 1, further **characterized in that** said web comprises a formed film (120), said formed film comprising at least one substantially elastomeric layer (101) having a first side and a second side and at least one, and more preferably at least two, substantially less elastomeric skin layers (103) substantially continuously joined to said substantially elastomeric layer (101) prior to the application of said stresses to said web (80).

3. A web (80) as claimed in Claims 1 or 2, further **characterized in that** said web (80) includes at least one intermediate interconnecting member (96) in a plane intermediate said first and second surfaces (85,90), such that at least one of said primary apertures (71) in said first surface (90) of said web (80) is in fluid communication with at least two secondary apertures (72) in said second surface (85) of said web (80).

4. A web (80) as claimed in any of the preceding Claims, further **characterized in that** said interconnecting members (91,92,93,94,95) exhibit generally transversely-oriented rugosities.

5. A web (80) as claimed in any of the preceding Claims, further **characterized in that** said web (80) includes a fibrous nonwoven material bonded to at least portions of at least one surface (85,90) of said web (80), such that said web (80) and said nonwoven material form a composite laminate.

6. A method for making a macroscopically-expanded, three-dimensional, elastomeric web (80) according to claim 1, said method having a continuous first surface (90) and a discontinuous second surface (85) remote from said first surface (90), said method comprising the steps of:
(a) providing a multilayer elastomeric film (120) having a thickness, said multilayer film (120) including at least one elastomeric layer (101) and at least one skin layer (103), preferably including at least one elastomeric layer (101) being disposed between at least two skin layers (103);
(b) supporting said multilayer film (120) on a forming structure (30) having exposed surfaces, said forming structure (30) exhibiting a multiplicity of apertures (61,63) which place said exposed surfaces of said forming structure (30) in fluid communication with one another; said forming structure (30) moving in a direction parallel to the direction of travel of said multilayer film (120) and carrying said multilayer film (120) in said direction; and
(c) applying a fluid pressure differential across said thickness of said multilayer film (120) along said direction of movement of said forming structure (90), said fluid pressure differential being sufficiently great to cause said multilayer film (120) to conform with said forming structure (30) and rupture in at least a portion of those areas coinciding with the apertures (61,63) in said forming structure (30).

7. A method as claimed in Claim 6, said method further **characterized in that** it includes the additional steps after step (c) of:
(d) providing at least one fibrous nonwoven web material;
(e) bonding said nonwoven web material to said elastomeric web (80) such that said nonwoven web material and said elastomeric web (80) form a composite laminate; and
(f) incrementally stretching said composite laminate to impart elasticity to said composite laminate.

8. A garment (400) having elastomeric portions wherein said elastomeric portions comprise a porous, macroscopically-expanded, three-dimensional elastomeric web (80) according to claim 1, said web (80) having a continuous first surface (90) and a discontinuous second surface (85), said first surface (90) and said second surface (85) being located in substantially parallel planes (102,106) which are remote from one another, said elastomeric web (80) having a multiplicity of elastomeric interconnecting members (91,92,93,94,95) of upwardly concave-shaped cross-section for substantially decoupling applied strain-induced stresses in said first surface (90) from said second surface (85), said interconnecting members (91,92,93,94,95) defining at least one primary aperture (71) in said first surface (90) and having interconnected sidewall portions (83) extending in the direction of said second surface (85), said interconnected sidewall portions (83) terminating to form at least one secondary aperture (72) having tear initiation sites in said second surface (85) of said elastomeric web (80), such that strain-induced stresses on said elastomeric web (80) are substantially decoupled from tear initiation sites in said secondary apertures (72), at least until said second surface (85) is no longer remote from said plane (102) of said first surface (90) when said stresses are applied to said web (80).

9. A garment (400) as claimed in Claim 8, further **characterized in that** said garment (400) is disposable, said garment (400) preferably being a disposable diaper (400).

10. A garment (400) as claimed in Claims 8 or 9, further **characterized in that** said garment (400) includes elastomeric side panels (420), said elastomeric side panels (420) comprising said elastomeric web (80).

## Patentansprüche

1. Poröse, makroskopisch expandierte, dreidimensionale Bahn (80) mit einer kontinuierlichen ersten Oberfläche (90) und einer diskontinuierlichen zweiten Oberfläche (85), wobei die erste Oberfläche (90) und die zweite Oberfläche (85) in im wesentlichen parallelen Ebenen (102, 106) angeordnet sind, welche voneinander entfernt sind, **dadurch gekennzeichnet, daß** die Bahn (80) elastomer ist, wobei die Bahn (80) aufweist eine Vielzahl von untereinander verbindenden Elementen (91, 92, 93, 94, 95) mit nach oben konkav geformtem Querschnitt zum im wesentlichen Entkoppeln aufgebrachter verformungsinduzierter Spannungen in der ersten Oberfläche (90) von der zweiten Oberfläche (85), wobei die untereinander verbindenden Elemente (91, 91, 93, 94, 95) wenigstens eine primäre Öffnung (71) in der ersten Oberfläche (90) begrenzen, und untereinander verbundene Seitenwandbereiche (83), die sich in der Richtung der zweiten Oberfläche (85) erstrecken, wobei die untereinander verbundenen Seitenwandbereiche (83) so enden, daß diese wenigstens eine sekundäre Öffnung (72) bilden, welche Reiß-Einleitungsstellen in der zweiten Oberfläche (85) der Bahn (80) aufweist, **dadurch gekennzeichnet, daß** die Bahn (80) und die untereinander verbindenden Elemente (91, 92, 93, 94, 95) elastisch sind, derart, daß verformungsinduzierte Spannungen auf die Bahn (80) von den Reiß-Einleitungsstellen in den sekundären Öffnungen (72) im wesentlichen entkoppelt sind, wenigstens bis die zweite Oberfläche (85) nicht länger entfernt von der Ebene (102) der ersten Oberfläche (90) liegt, wenn die Spannungen auf die Bahn (80) aufgebracht werden.

2. Bahn (80) nach Anspruch 1, ferner **dadurch gekennzeichnet, daß** die Bahn einen geformten Film (120) aufweist, wobei der geformte Film wenigstens eine im wesentlichen elastomere Schicht (101) mit einer ersten Seite und einer zweiten Seite und wenigstens einer, und ganz bevorzugt wenigstens zwei, im wesentlichen weniger elastomeren Hautschichten (103) aufweist, die im wesentlichen mit der im wesentlichen elastomeren Schicht (101) vor der Aufbringung der Spannungen auf die Bahn (80) im wesentlichen kontinuierlich verbunden sind.

3. Bahn (80) nach Ansprüchen 1 oder 2, ferner **dadurch gekennzeichnet, daß** die Bahn (80) wenigstens ein mittleres untereinander verbindendes Elements (96) in einer mittigen Ebene zwischen der ersten und zweiten Oberfläche (85, 90) aufweist, derart, daß wenigstens eine der primären Öffnungen (71) in der ersten Oberfläche (90) der Bahn (80) in Fluidkommunikation mit wenigstens zwei sekundären Öffnungen (72) in der zweiten Oberfläche (85) der Bahn (80) steht.

4. Bahn (80) nach einem der vorstehenden Ansprüche, ferner **dadurch gekennzeichnet, daß** die untereinander verbindenden Elemente (91, 92, 93, 94, 95) im wesentlichen quer gerichtete Fältelungen zeigen.

5. Bahn (80) nach einem der vorstehenden Ansprüche, ferner **dadurch gekennzeichnet, daß** die Bahn (80) ein faseriges Vliesmaterial aufweist, das an wenigstens Bereichen wenigstens einer Oberfläche (85, 90) der Bahn (80) gebunden ist, derart, daß die Bahn (80) und das Vliesmaterial ein zusammen gesetztes Laminat bilden.

6. Verfahren zum Herstellen einer makroskopisch expandierten, dreidimensionalen, elastomeren Bahn (80) nach Anspruch 1, wobei das Verfahren aufweist eine kontinuierliche erste Oberfläche (90) und eine diskontinuierliche zweite Oberfläche (85) entfernt von der ersten Oberfläche (90), wobei das Verfahren die Schritte umfaßt:
(a) Bereitstellen eines mehrschichtigen elastomeren Films (120) mit einer Dicke, wobei der mehrschichtige Film (120) wenigstens eine elastomere Schicht (101) und wenigstens eine Hautschicht (103) aufweist, vorzugsweise wenigstens eine elastomere Schicht (101) aufweist, die zwischen wenigstens zwei Hautschichten (103) angeordnet ist;
(b) Abstützen des mehrschichtigen Films (120) auf einer Formungsstruktur (30) mit frei liegenden Oberflächen, wobei die Formungsstruktur (30) eine Vielzahl von Öffnungen (61, 63) zeigt, welche die frei liegenden Oberflächen der Formungsstruktur (30) in Fluidkommunikation mit einander bringen; wobei sich die Formungsstruktur (30) in einer Richtung parallel zur Bewegungsrichtung des mehrschichtigen Films (120) bewegt und den mehrschichtigen Film (120) in dieser Richtung transportiert; und
(c) Aufbringen einer Fluiddruckdifferenz über die Dicke des mehrschichtigen Films (120) entlang der Bewegungsrichtung der Formungsstruktur (90), wobei die Fluiddruckdifferenz ausreichend groß ist, um den mehrschichtigen Film (120) dazu zu veranlassen, sich an die Formungsstruktur (30) anzupassen und in wenigstens einem Bereich dieser Flächen, die mit den Öffnungen (61, 63) in der Formungsstruktur (30) zusammenfallen, zu reißen.

7. Verfahren nach Anspruch 6, wobei das Verfahren ferner **dadurch gekennzeichnet ist, daß** dieses nach dem Schritt (c) die zusätzlichen Schritte aufweist:
(d) Bereitstellen wenigstens eines faserigen Vliesbahnmaterial;
(e) Binden des Vliesbahnmaterials an die elastomere Bahn (80) derart, daß das Vliesbahnmaterial und die elastomere Bahn (80) ein zusammen gesetztes Laminat bilden; und
(f) inkrementales Strecken des zusammen gesetzten Laminats, um dem zusammen gesetzten Laminat eine Elastizität zu verleihen.

8. Wäsche (400) mit elastomeren Bereichen, wobei die elastomeren Bereiche eine poröse, makroskopisch expandierte, dreidimensionale elastomere Bahn (80) nach Anspruch 1 umfassen, wobei die Bahn (80) eine kontinuierliche erste Oberfläche (90) und eine diskontinuierliche zweite Oberfläche (85) aufweist, wobei die erste Oberfläche (90) und die zweite Oberfläche (85) in im wesentlichen parallelen Ebenen (102, 106) angeordnet sind, die entfernt voneinander sind, wobei die elastomere Bahn (80) eine Vielzahl von elastomeren, untereinander verbindenden Elementen (91, 92, 93, 94, 95) von nach oben konkav geformtem Querschnitt zum im wesentlichen Entkoppeln aufgebrachter, verformungsinduzierter Spannungen in der ersten Oberfläche (90) von der zweiten Oberfläche (85) umfaßt, wobei die untereinander verbindenden Elemente (91, 92, 93, 94, 95) wenigstens eine primäre Öffnung (71) in der ersten Oberfläche (90) begrenzen und untereinander verbundene Seitenwandbereiche (83) aufweisen, die sich in die Richtung der zweiten Oberfläche (85) erstrecken, wobei die untereinander verbundenen Seitenwandbereiche (83) so enden, daß diese wenigstens eine sekundäre Öffnung (72) mit Reiß-Einleitungsstellen in der zweiten Oberfläche (85) der elastomeren Bahn (80) bilden, derart, daß verformungsindzuzierte Spannungen auf die elastomere Bahn (80) von den Reiß-Einleitungsstellen in den sekundären Öffnungen (72) im wesentlichen entkoppelt sind, wenigstens bis die zweite Oberfläche (85) nicht länger entfernt von der Ebene (102) der ersten Oberfläche (90) ist, wenn die Spannungen auf die Bahn (80) aufgebracht werden.

9. Wäsche (400) nach Anspruch 8, ferner **dadurch gekennzeichnet, daß** die Wäsche (400) wegwerfbar ist, wobei die Wäsche (400) vorzugsweise eine Einwegwindel (400) ist.

10. Wäsche (400) nach den Ansprüchen 8 oder 9, ferner **dadurch gekennzeichnet, daß** die Wäsche (400) elastomere Seitenfelder (420) aufweist, wobei die elastomeren Seitenfelder (420) die elastomere Bahn (80) aufweisen.

## Revendications

1. Bande tridimensionnelle poreuse expansée de matière macroscopiquc (80), ayant une première surface continue (90) et une seconde surface discontinue (85), ladite première surface (90) et ladite seconde surface (85) étant positionnées dans des plans sensiblement parallèles (102, 106) qui sont à distance l'un de l'autre, **caractérisée en ce que** ladite bande (80) est en élastomère, ladite bande (80) comportant une multiplicité d'éléments de connexion mutuelle (91, 92, 93, 94, 95) ayant une coupe transversale de forme concave vers le haut, pour découpler sensiblement des contraintes induites par un effort dans ladite première surface (90) à partir de ladite seconde surface (85), lesdits éléments de connexion mutuelle (91, 92, 93, 94, 95) définissant au moins une ouverture principale (71) dans ladite première surface (90), et ayant des parties formant parois latérales connectées mutuellement (83) s'étendant dans la direction de ladite seconde surface (85), lesdites parties formant parois latérales connectées mutuellement (83) se terminant pour former au moins une ouverture secondaire (72) ayant des sites d'amorçage de déchirement dans ladite seconde surface (85) de ladite bande (80), **caractérisée en ce que** ladite bande (80) et lesdits éléments de connexion mutuelle (91, 92, 93, 94, 95) sont élastiques, de telle sorte que les contraintes induites par un effort exercées sur ladite bande (80) sont sensiblement découplées à partir de sites d'amorçage de déchirement situés dans lesdites ouvertures secondaires (72), au moins jusqu'à ce que ladite seconde surface (85) ne soit plus à distance dudit plan (102) de ladite première surface (90) lorsque lesdites contraintes sont appliquées à ladite bande (80).

2. Bande (80) selon la revendication 1, **caractérisée** de plus en ce que ladite bande porte un film formé (120), ledit film formé comportant au moins une couche sensiblement élastomériquc (101) ayant un premier côté et un second côté et au moins une, et de manière plus préférée au moins deux couches de peau sensiblement moins élastomérique (103) sensiblement reliées en continu à ladite couche sensiblement élastomérique (101) avant l'application desdites contraintes sur la bande (80).

3. Bande (80) selon la revendication 1 ou 2, **caractérisée** de plus en ce que ladite bande (80) comporte au moins un élément de connexion mutuelle intermédiaire (96) dans un plan situé entre lesdites première et seconde surfaces (85, 90), de telle sorte qu'au moins une desdites ouvertures principales (71) situées dans ladite première surface (90) de ladite bande (80) est en communication de fluide avec au moins deux ouvertures secondaires (72) situées dans ladite seconde surface (85) de ladite bande (80).

4. Bande (80) selon l'une quelconque des revendication précédentes, **caractérisée** de plus en ce que lesdits éléments de connexion mutuelle (91, 92, 93, 94, 95) présentent des rugosités orientées globalement dans une direction transversale.

5. Bande (80) selon l'une quelconque des revendications précédentes, **caractérisée** de plus en ce que ladite bande (80) comporte un matériau tissé non-fibreux fixé sur au moins des parties d'au moins une surface (85, 90) de ladite bande (80), de telle sorte que ladite bande (80) et ledit matériau non-tissé forment un stratifié composite.

6. Procédé pour fabriquer une bande élastomérique tridimensionnelle expansée de manière macroscopique (80) selon la revendication 1 ayant une première surface continue (90) et une seconde surface discontinue (85) située à distance de ladite première surface (90), ledit procédé comportant les étapes consistant à :
(a) fournir un film élastomérique multicouche (120) ayant une épaisseur, ledit film multicouche (120) comportant au moins une couche élastomérique (101) et au moins une couche de peau (103), comportant de préférence au moins une couche élastomérique (101) disposée entre au moins deux couches de peau (103),
(b) supporter ledit film multicouche (120) sur une structure de formation (30) ayant des surfaces exposées, ladite structure de formation (30) présentant une multiplicité d'ouvertures (61, 63) qui positionnent lesdites surfaces exposées de ladite structure de formation (30) en communication de fluide les unes avec les autres, ladite structure de formation (30) se déplaçant dans une direction parallèle à la direction de déplacement dudit film multicouche (120), et transportant ledit film multicouche (120) dans ladite direction, et
(c) appliquer un différentiel de pression de fluide à travers ladite épaisseur dudit film multicouche (120) le long de ladite direction de déplacement de ladite structure de formation (30), ledit différentiel de pression de fluide étant suffisamment important pour amener ledit film multicouche (120) à se conformer à ladite structure de formation (30), et à se rompre dans au moins une partie des ces zones coïncidant avec les ouvertures (61, 63) situées dans ladite structure de formation (30).

7. Procédé selon la revendication 6, ledit procédé étant de plus **caractérisé en ce qu'**il comporte les étapes supplémentaires après l'étape (c) consistant à :
(d) fournir un matériau de bande non-tissé fibreux,
(e) fixer ledit matériau de bande non-tissé sur ladite bande élastomérique (80), de telle sorte que ledit matériau de bande non-tissé et ladite bande élastomérique (80) forment un stratifié composite, et
(f) étirer de manière incrémentielle ledit stratifié composite pour imprimer de l'élasticité audit stratifié composite.

8. Vêtement (400) ayant des parties élastomériques, lesdites parties élastomériques comportant une bande élastomérique tridimensionnelle poreuse et expansée de manière macroscopique (80) selon la revendication 1, ladite bande (80) ayant une première surface continue (90) et une seconde surface discontinue (85), laditc première surface (90) et ladite secondc surface (85) étant positionnées dans des plans sensiblement parallèles (102, 106) qui sont à distance l'un de l'autre, ladite bande élastomérique (80) ayant une multiplicité d'éléments de connexion mutuelle en élastomère (91, 92, 93, 94, 95) de coupe transversale concave vers le haut pour découpler sensiblement des contraintes induites par un effort dans ladite première surface (90) à partir de ladite seconde surface (85), lesdits éléments de connexion mutuelle (91, 92, 93, 94, 95) définissant au moins une ouverture principale (71) dans ladite première surface (90), et ayant des parties formant parois latérales connectées mutuellement (83) s'étendant dans la direction de ladite seconde surface (85), lesdites parties formant parois latérales connectées mutuellement (83) se terminant pour former au moins une ouverture secondaire (72) ayant des sites d'amorçage de déchirement situés dans ladite seconde surface (85) de ladite bande élastomérique (80), de telle sorte que les contraintes induites par un effort exercées sur ladite bande élastomérique (80) sont sensiblement découplées à partir de sites d'amorçage de déchirement situés dans lesdites ouvertures secondaires (72), au moins jusqu'à ce que ladite seconde surface (85) ne soit plus à distance dudit plan (102) de ladite première surface (90) lorsque lesdites contraintes sont appliquées à ladite bande (80).

9. Vêtement (400) selon la revendication 8, **caractérisé** de plus en ce que ledit vêtement (400) est jetable, ledit vêtement (400) étant de préférence une couche jetable (400).

10. Vêtement (400) selon la revendication 8 ou 9, **caractérisé** de plus en ce que ledit vêtement (400) comporte des panneaux latéraux en élastomère (420) lesdits panneaux latéraux en élastomère (420) comportant ladite bande élastomérique (80).
